# EUROPÄISCHE PATENTSCHRIFT

(11) **EP 1 230 814 B1**
(45) Veröffentlichungstag und Bekanntmachung des Hinweises auf die Patenterteilung: **01.03.2006**
(21) Anmeldenummer: 99953508.1
(22) Anmeldetag: 16.11.1999
(51) Int. Cl.: H04Q 7/22, G06Q 30/00

(54) **PRODUKTEBESTELLUNGSVERFAHREN UND SYSTEM**
METHOD AND SYSTEM FOR ORDERING PRODUCTS
PROCEDE ET SYSTEME DE COMMANDE DE PRODUITS

(43) Veröffentlichungstag der Anmeldung: 14.08.2002
(73) Patentinhaber: Swisscom Mobile AG, 3050 Bern (CH)
(72) Erfinder: RITTER, Rudolf, CH-3052 Zollikofen (CH); LAUPER, Eric, CH-3012 Bern (CH)
(74) Vertreter: P&TS Patents & Technology Surveys SA
(86) Internationale Anmeldenummer: PCT/CH1999/000541
(87) Internationale Veröffentlichungsnummer: WO 2001/037591

(56) Entgegenhaltungen:
- EP-A- 0 951 191
- WO-A-97/45814
- DE-U- 29 613 393

## Beschreibung

Die vorliegende Erfindung betrifft ein Verfahren, mit welchem Produkte und Informationen über Produkte bestellt werden können.

Das Patent EP689368 beschreibt ein Verfahren, um Daten in SMS-Meldungen (Short Message Services) zu verpacken und durch ein Mobilfunknetz zu übertragen. Mit diesem Verfahren können zum Beispiel nicht nur kurze Textmeldungen wie zum Beispiel «Ruf doch bitte nach Hause an» zwischen verschiedenen Mobilfunkgeräten übermittelt werden, sondern auch komplexere Meldungen und Programme, die automatisch vom Empfängerterminal erkannt werden und eine bestimmte Aktion auslösen können.

Die WAP-Architektur (Wireless Application Protocol) beschreibt ein anderes Protokoll, mit dem die Benutzer von WAP-tauglichen Mobilgeräten auf Internet-, Intranet- und Internet-ähnlichen Dienste über verschiedene Bearers wie SMS, USSD, usw. zugreifen können.

Damit eröffnet sich die Möglichkeit, Mobilgeräte als Client in einer Client-Server-Architektur in einem Mobilfunknetz zu benutzen. Der Vorteil an solchen Systemen ist die Möglichkeit, Kunden mit einer grossen Sicherheit mittels einem Identifizierungsmodul, zum Beispiel mittels einer SIM-Karte (Subscriber Identification Module), zu identifizieren. Es wurde zum Beispiel in der Patentanmeldung WO98/28900 vorgeschlagen, Auftragscodes in einem Mobilgerät einzugeben, um zum Beispiel Produkte oder Dienstleistungen bei einem Lieferanten zu bestellen. Diese Auftragscodes sind standardisiert und enthalten mindestens ein erstes Feld, mit welchem ein Lieferant eindeutig identifiziert wird, sowie ein zweites Feld, mit welchem ein bestimmtes Produkt von diesem Lieferanten angegeben wird. Zusätzliche Felder können ausserdem definiert werden, um beispielsweise die Transaktionsart und die Zahlungsart anzugeben. Der Kunde wird zuverlässig von der Infrastruktur im Netz identifiziert. Die von den Teilnehmern erfassten Auftragscodes werden an eine Clearingstelle im Mobilfunknetz übermittelt und von dieser automatisch dem angegebenen Lieferanten zugeteilt. Der ausgewählte Lieferant bekommt einen Auftrag vom Kunden mit einer eindeutigen Identifizierung dieses Kunden und des bestellten Produktes oder der gewünschten Dienstleistung.

Das Eintippen von Auftragscodes, die viele Zeichen enthalten können, mit einer oft miniaturisierten und unvollständigen Tastatur ist jedoch eher mühsam und fehleranfällig. Ausserdem kann es für einen Anbieter schwierig sein, Produktecodes rasch bekannt zu machen.

Ein anderes Verfahren, welches das Eintippen von Auftragcodes auf der Tastatur eines Mobiltelefons erfordert, wird in EP-A1-0951191 beschrieben.

DE-U1-29613393 beschreibt ein Mobiltelefon mit einem Barcodeleser. Die Signale des Barcodelesers werden innerhalb des Telefons durch eine Codiereinrichtung in die betreffenden Bestellnummer umgewandelt und gespeichert. Die Bestellnummer wird dann an einen Fernserver übertragen. Dieses Verfahren eignet sich nur für Bilder, die innerhalb des Mobiltelefons konvertiert werden können.

Es ist daher ein Ziel dieser Erfindung, ein neues und verbessertes Bestellungsverfahren anzubieten.

Ein anderes Ziel ist es, ein Bestellungsverfahren anzubieten, das benutzerfreundlicher ist.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass ein Bild des zu bestellenden Produktes aufgenommen wird, dass die Bilddatei an einen Server in einem Mobilfunknetz übertragen wird, dass ein Vergleich der benannten Bilddatei mit in einer Produktedatenbank gespeicherten Bildern im benannten Server erfolgt, wobei jedes benannte Bild in der benannten Datenbank mit einer Identifizierung des Produktanbieters verbunden ist, und dass anschliessend eine Meldung, die eine Identifizierung des bestellten Produktes und des bestellenden Mobilteilnehmers enthält, an den benannten Produktanbieter ausgesendet wird.

Dies hat den Vorteil, dass der Mobilteilnehmer keine Produktcodes eingeben muss und nur ein Bild des gewünschten Produktes aussenden muss. Das Bild kann mit einer Kamera, die im Mobilfunktelefon integriert oder mit dem Mobilfunktelefon verbunden ist, aufgenommen werden.

Im Folgenden werden anhand der beigefügten Zeichnung bevorzugte Ausführungsbeispiele der Erfindung näher beschrieben. Es zeigt:

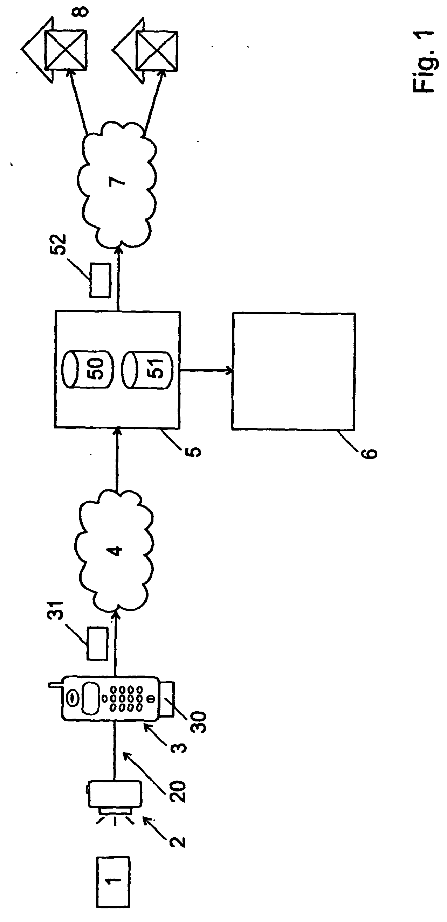

Die Figur 1, ein Beispiel eines Systems, in welchem das erfindungsgemässe Verfahren angewendet werden kann.

Obwohl diese Erfindung in mehreren Details den speziellen Fall der Ausführung in einem GSM-Mobilfunknetz beschreibt, wird der Fachmann verstehen, dass dieses Verfahren auch mit anderen Typen von Funknetzen, beispielsweise mit AMPS, TDMA, CDMA, TACS, PDC, HSCCD, GPRS, EDGE oder UMTS-Mobilfunknetzen, oder mit Pager-Systemen, oder auch in einem kontaktlosen-LAN oder in einem lokalen Netz gemäss Bluetooth eingesetzt werden kann.

Die Figur 1 zeigt in schematischer Weise ein System, mit welchem der Benutzer eines Mobilfunktelefons 3 ein Produkt 1 bei einem Anbieter 8 bestellen kann. Das Bezugszeichen 1 zeigt ein Produkt, oder einen Teil eines Produktes mit welchem das gesamte Produkt identifiziert werden kann, oder ein Bild welches das Produkt eindeutig identifiziert, beispielsweise ein zweidimensionales Bild in einem Katalog oder auf einem Plakat, eine Produktseriennummer, usw.

Das Element 2 ist ein Bildaufnahmegerät, beispielsweise eine Kamera, mit welchem Bilder von drei-dimensionalen Objekten aufgenommen werden können, ein Scanner der eher für Aufnahmen von zweidimensionalen Bildern geeignet ist, oder ein Empfangsgerät, beispielsweise ein Internet-, DAB- oder DVB-Empfänger (Digital Audio bzw. Video Broadcasting), ein Fernsehgerät, usw., das ausgesendete Bilder und Bilderprogramme empfangen kann. Das Bildaufnahmegerät 2 ist in ein Mobilfunktelefon 3 integriert oder mit einem solchen Mobilfunktelefon über eine Schnittstelle 20, vorzugsweise eine kontaktlose Schnittstelle im Nahbereich, verbunden. Die kontaktlose Schnittstelle 20 kann beispielsweise aus einer Bluetooth, HomeRF oder IrdA-Schnittstelle bestehen. Das Mobilfunktelefon kann beispielsweise ein vorzugsweise WAP-fähiges (Wireless Application Protocol) GSM, GPRS, EDGE oder UMTS-Mobilgerät sein welches ein Identifizierungsmodul 30, beispielsweise eine SIM- oder WIM-Karte (Subscriber Identification Module bzw. WAP Identification Module) enthält. Das Mobilfunktelefon funktioniert vorzugsweise mit einem offenen Betriebssystem, beispielsweise mit EPOC (Warenzeichen von Symbian), PalmOS (Warenzeichen von 3Com) oder Windows CE (Warenzeichen von Microsoft), so dass auch Anwendungen von Dritten, insbesondere auch JAVA-Applets, ausgeführt werden können. Die Benutzeridentifikation kann über PIN-Eingabe oder biometrische Verfahren erfolgen.

Das Mobilfunktelefon 3 kann sich in einem Mobilfunknetz 4 anmelden, in welchem ein Server 5 vorhanden ist. Der Server 5 umfasst eine Benutzerdatenbank 50, in welcher Attribute von einer Vielzahl von Mobilteilnehmern im Mobilfunknetz 4 abgelegt sind, sowie eine Produktedatenbank 51. Die Benutzerattribute 50 umfassen vorzugsweise die Adresse, beispielsweise die Rechnungsadresse und/oder die Lieferadresse des Mobilteilnehmers für die Zustellung der bestellten Ware, sowie seine Bestellungspräferenzen, wie später erläutert.

Der Server 5 kann beispielsweise vom Betreiber des Mobilfunknetzes verwaltet werden, der meistens über eine zuverlässige Mobilteilnehmerdatenbank verfügt, aus welcher die Mobilteilnehmerattribute in der Benutzerdatenbank 50 entnommen werden können.

Das Bezugszeichen 6 zeigt ein Verrechnungszentrum, mit welchem bestellte Produkte verrechnet werden. Je nach Ausführungsform kann das Verrechnungszentrum auch in den Server 5 integriert oder mit diesem verbunden werden. Der Verrechnungszentrum 6 kann beispielsweise auch verwendet werden, um den Mobilfunkteilnehmern Telefonverbindungen durch das Netz zu verrechnen.

Der Server 5 ist über ein Telekommunikationsnetz 7, beispielsweise über das öffentliche Telekommunikationsnetz, über das ISDN, über ein Mobilfunknetz, über ein Privatnetz, über Internet oder auch über die normale Post, mit den Anbietern 8 verbunden. Durch das Netz 7 kann der Server 5 Meldungen an Produktanbieter 8 senden, beispielsweise als E-Mail, als Fax, per normale Post, durch eine Lieferfirma, usw. Der Produkteanbieter kann dann das bestellte Produkt über einen nicht dargestellten Rückkanal an die angegebene Adresse liefern, beispielsweise und je nach Produkt als E-Mail, als WAP-, USSD- oder SMS-Meldung, per normale Post, durch eine Lieferfirma, usw. Die Datenübertragung zwischen dem Server 5 und den Anbietern 8 wird vorzugsweise mit TTP-Diensten gesichert (Trusted Third Party).

Wir werden jetzt das erfindungsgemässe Verfahren näher beschreiben.

Ein Mobilfunkteilnehmer, der ein Produkt 1 mit dem erfindungsgemässen Verfahren bestellen will, muss zuerst ein Bild dieses Produktes mit dem Bildaufnahmegerät 2 aufnehmen und in das Mobilfunktelefon über die Schnittstelle 20 übertragen. Je nach Art des Produktes und nach Anbieter kann das Bild das gesamte Produkt darstellen, oder nur einen identifizierenden Bestandteil des Produktes, beispielsweise eine Seriennummer oder einen Informationskleber auf dem Produkt. Das Bild kann auch aus einem Katalog oder einer Werbung aufgenommen werden, oder direkt im Internet oder als DAB beziehungsweise DVB programmbegleitende Datei ferngeladen werden.

Das digital aufgenommene Bild wird dann vorzugsweise komprimiert, beispielsweise gemäss dem JPEG, GIF, TIF oder PDF Format und über die benannte Schnittstelle 20 an das Mobilfunktelefon 3 übertragen. Die Bilddatei kann auch in einer Variante im Mobilfunktelefon 3 komprimiert werden.

Die Bilddatei wird dann in einem Speicherbereich des Mobilfunktelefons gespeichert und kann vorzugsweise mit dessen Bildwiedergabemitteln, beispielsweise mit einem LCD (Liquid Crystal Display) oder VRD (Virtual Retina Display) Bildwiedergabegerät wiedergegeben werden, damit der Mobilteilnehmer die Aufnahme prüfen kann, allenfalls editieren und allenfalls einen Teil durch einen Zeiger bezeichnen kann.

Mit den Datenverarbeitungsmitteln im Mobilfunktelefon wird eine Bestellungsmeldung 31 vorbereitet. Die Bestellungsmeldung enthält die vorzugsweise komprimierte Bilddatei sowie eine Benutzeridentifizierung, die vorzugsweise aus dem Identifizierungsmodul 30, beispielsweise der IMSI (International Mobile Subscriber Identity) des Mobilteilnehmers, entnommen wird. Der Mobilteilnehmer kann ausserdem vorzugsweise seine Präferenzen mit dem Bestellungsprogramm eingeben, beispielsweise die gewünschte Rechnungsart, die Lieferungsart, die Lieferadresse, die bestellte Menge, usw. Diese Präferenzangaben werden mit der Bestellungsmeldung verknüpft. Mindestens gewisse Präferenzen des Mobilteilnehmers werden vorzugsweise in einem Speicherbereich des Identifizierungsmoduls 30 abgelegt, damit sie nicht bei jeder neuen Bestellung wieder eingegeben werden müssen.

Wenn der Mobilteilnehmer mit dem Bestellungsprogramm bestätigt, dass er das aufgenommene Produkt bestellen will, wird die Bestellungsmeldung 31 durch das Mobilfunknetz 4 an den Server 5 gesendet. Die Bestellungsmeldung kann beispielsweise aus einer Vielzahl von SMS-Meldungen bestehen, wie im Patent EP689368 beschrieben. In einer bevorzugten Variante besteht jedoch die Bestellungsmeldung aus einer Vielzahl von Paketen, die beispielweise gemäss WAP, GPRS, EDGE, UMTS oder TCP-IP übertragen werden. Die Bestellungsmeldung kann aber auch als Datei im Sprachkanal, beispielsweise mit einem Modem oder in einem UMTS-Netz übertragen werden. Die Bestellungsmeldung wird vorzugsweise mit dem öffentlichen Schlüssel des Servers 5 verschlüsselt und mit einem im Identifizierungsmoduls 30 abgelegten Zertifikat signiert, damit der Server 5 den Ursprung und die Authentizität der Meldung prüfen kann. Über einen Zeitstempeldienst kann auch die Nichtzurückweisung der Bestellung sichergestellt werden.

Der Server 5 empfängt die Bestellungsmeldung und prüft zuerst die Signatur des Mobilteilnehmers. Kann mit dieser Signatur die Authentizität und der Ursprung der Meldung ermittelt werden, wird die Bestellungsmeldung mit dem privaten Schlüssel des Servers entschlüsselt und die Bilddatei entkomprimiert.

Ein Modul im Server 5 vergleicht dann die entkomprimierte Bilddatei mit Produktbildern in der Produktedatenbank 51. Dieser Vergleich erfolgt beispielsweise mit einem speziell trainierten neuronalen Netz oder mit anderen bekannten Bildervergleichsalgorithmen, wie sie beispielsweise von Bildersuchmaschinen im Internet verwendet werden.

Die Produktedatenbank 51 kann vorzugsweise mehrere Bilder von jedem angebotenen Produkt enthalten, damit der Produktvergleich auch dann möglich ist, wenn sehr unterschiedliche Aufnahmen gesendet werden. Die Produktbilder werden vorzugsweise von den Anbietern 8 selbst zur Verfügung gestellt und in der Datenbank 51 abgelegt, wobei der verwendete Speicherbereich vom Betreiber des Servers 5 an die Anbieter vermietet werden kann.

Wenn das benannte Modul im Server ein Produktbild in der Produktedatenbank findet, das der empfangenen Bilddatei entsprechen könnte, sendet es vorzugsweise eine Meldung, beispielsweise eine SMS, USSD, E-Mail, WAP oder Sprachmeldung an den Mobilteilnehmer, in welcher die gefundene Produkteidentifizierung, beispielsweise der Name oder eine Beschreibung des gefundenen Produktes angegeben ist. Der Mobilteilnehmer wird damit aufgefordert, das Ergebnis dieses Vergleiches zu bestätigen. Erfolgt keine Bestätigung, versucht der Server ein anderes passendes Produkt in der Produktedatenbank zu finden, bis der Mobilteilnehmer ein gefundenes Produkt bestätigt.

Wenn der Server kein Bild in der Produktedatenbank 51 findet, das der empfangenen Bilddatei entsprechen könnte und das vom Mobilteilnehmer bestätigt wird, wird vorzugsweise eine Fehlermeldung an den Mobilteilnehmer gesendet. Der Mobilteilnehmer hat dann die Möglichkeit, weitere Indizien, beispielsweise einen Produktcode, einen Produktnamen, die Anbieteridentifizierung, usw., einzugeben, damit der Vergleichsprozess erleichtert wird.

In einer bevorzugten Variante kann die Produktedatenbank 51 ausserdem Angaben über die verfügbare Menge des angebotenen Produktes enthalten. Diese Menge wird dann bei jeder Bestellung automatisch dekrementiert.

Wird in der Produktedatenbank 51 ein Produkt gefunden, das der empfangenen Bilddatei entspricht und wird dieses vom Mobilteilnehmer bestätigt, versucht der Server 5 zusätzliche Mobilteilnehmerattribute aus der Benutzerdatenbank 50 zu entnehmen. Die Datenbank 50 enthält vorzugsweise für jeden Mobilteilnehmer, der mit seiner Mobilteilnehmeridentifizierung, beispielsweise IMSI oder MSISDN identifiziert wird, alle Attribute, die dem Anbieter erlauben, den Mobilteilnehmer gänzlich zu identifizieren und den Auftrag komplett auszuführen. Z.B. können die eingelesenen Mobilteilnehmerattribute die Rechnungs- und Liefer-Adresse des Mobilteilnehmers enthalten, sowie seine Benutzerpräferenzen, beispielsweise seine bevorzugte Korrespondenzsprache, die gewünschte Lieferungsart und Rechnungsart, usw. sofern diese Attribute nicht in der Meldung 31 angegeben sind.

Diese zusätzliche mobilteilnehmerspezifischen Attribute werden dann mit der vom Anbieter gewünschten Produkteidentifizierung, beispielsweise mit einer Produktseriennummer, verknüpft, und eine Meldung 52 wird über das Telekommunikationsnetz 7 an den in der Produktedatenbank 51 angegebenen Anbieter gesendet.

Die Meldung 52 wird vorzugsweise vom Server 5 elektronisch signiert und verschlüsselt, damit der empfangene Anbieter 8 ihre Authentizität und ihren Ursprung prüfen kann. Eine Kopie von den relevanten Elementen wird ausserdem vorzugsweise an das Rechnungszentrum 6 gesendet, damit die Bestellung dem Mobilteilnehmer verrechnet werden kann. Das bestellte Produkt kann je nach Mobilteilnehmerpräferenzen vorzugsweise wie Verbindungen im benannten Mobilfunknetz verrechnet werden, beispielsweise durch Belastung eines vorbezahlten Kontos im Identifizierungsmodul 30 des Mobilteilnehmers oder mit der Telefonrechnung.

Der Anbieter, der auf diese Weise eine Bestellungsmeldung erhält, kann dann das bestellte Produkt oder die gewünschte Information über einen passenden Lieferungskanal liefern. Wenn das bestellte Angebot digitalisiert werden kann, kann es über einen elektronischen Kanal, beispielsweise als E-Mail oder über FTP-Dienste durch das Internet oder als SMS oder USSD über das Mobilfunknetz 4 übertragen werden. Auf diese Weise können beispielsweise Anwendersoftware, musikalische Daten, beispielsweise in MP3-Format codiert, Videodaten, beispielsweise in einem MPEG-Format codiert, usw., von welchen ein Foto des Covers übertragen wurde, geliefert werden. Ausserdem kann vorzugsweise der Anbieter 1 prüfen, ob das Endgerät das Format der elektronischen Daten empfangen kann und ob er noch genug Speicherplatz hat. Für diesen Test können zum Beispiel JINI-Funktionen verwendet werden.

Mit dem erfindungsgemässen Verfahren können aber auch Produkte bestellt werden, die nur per Post oder von einer Lieferfirma geliefert werden können.

Nebst den Verdienstmöglichkeiten durch das Anbieten der Dienstleistungen aus dem beschriebenen Verfahren ist es auch möglich, einen Server 5, insbesondere die Softwareprogramme für einen solchen Server, sowie Systeme mit einem Bildaufnahmegerät 2 und einem speziell programmierten Mobilfunktelefon 3 zu vermarkten. Das erfindungsgemässe Verfahren kann aber auch mit normalen Endgeräten eingesetzt werden, beispielsweise mit einer konventionellen Kamera 2 und einem konventionellen Mobilfunktelefon 3, die über eine passende Schnittstelle im Nahbereich verfügen, beispielsweise eine Bluetooth-Schnittstelle 20, über welche sie Bilddateien kommunizieren können. In diesem Fall braucht das Mobilfunktelefon nur ein Programm, mit welchem Bilddateien komprimiert, verschlüsselt, signiert und mit Mobilteilnehmerattributen verknüpft werden können. Dieses Programm kann beispielsweise als Applet vermarktet werden und über das Mobilfunknetz 4 ferngeladen werden.

| | |
|---|---|
| 1 | Produkt |
| 2 | Kamera oder Scanner |
| 20 | Schnittstelle (Bluetooth, HomeRF, IrdA, usw.) |
| 3 | Mobilfunktelefon |
| 30 | Identifizierungskarte (SIM, WIM) |
| 31 | Bestellungsmeldung |
| 4 | Mobilfunknetz |
| 5 | Flexmart-Server |
| 50 | Mobilteilnehmerdatenbank |
| 51 | Produktedatenbank |
| 52 | Verknüpfte Daten |
| 6 | Billing-Center |
| 7 | Telekommunikationsnetz (PSTN, Internet, GSM, ..) |
| 8 | Produkteanbieter |

## Patentansprüche

1. Verfahren, mit welchem ein Mobilteilnehmer in einem Mobilfunknetz (4) Produkte (1) bestellen kann,
wobei eine Bestellungsmeldung (31) an einen Server (5) im benannten Mobilfunknetz (4) übertragen wird,
wobei eine Meldung (52), die eine Identifizierung des bestellten Produktes (1) und des bestellenden Mobilteilnehmers enthält, an einen Produktanbieter (8) ausgesendet wird,
**gekennzeichnet durch**:
Aufnehmen eines Bildes, das dem zu bestellenden Produkt (1) entspricht,
Verknüpfung der Bilddatei mit einer persönlichen Identifizierung des Mobilteilnehmers in die benannte Bestellungsmeldung,
Vergleich im benannten Server der benannten Bilddatei mit in einer Produktedatenbank (50) gespeicherten Bildern, wobei jedes benannte Bild in der benannten Datenbank (50) mit einer Identifizierung des benannten Produkteanbieters (8) verbunden ist, an welchen die benannte Meldung ausgesendet wird.

2. Verfahren gemäss dem vorhergehenden Anspruch, **dadurch gekennzeichnet, dass** das benannte Bild mit einer mit einem Mobilfunktelefon (3) verbundenen Kamera (2) aufgenommen wird.

3. Verfahren gemäss dem Anspruch 1, **dadurch gekennzeichnet, dass** das benannte Bild mit einem mit einem Mobilfunktelefon (3) verbundenen Scanner (2) aufgenommen ist.

4. Verfahren gemäss dem vorhergehenden Anspruch, **dadurch gekennzeichnet, dass** das benannte Bild ein Bild eines zweidimensionalen identifizierten Teils des benannten Produktes (1) ist.

5. Verfahren gemäss dem Anspruch 1, **dadurch gekennzeichnet, dass** das benannte Bild von einem Funkempfänger empfangen wird.

6. Verfahren gemäss einem der vorhergehende Ansprüche, **dadurch gekennzeichnet, dass** das benannte Bild mit einem über eine kontaktlose Schnittstelle (20) im Nahbereich mit dem Mobilfunktelefon (3) verbundenen Bildaufnahmegerät (2) aufgenommen wird.

7. Verfahren gemäss einem der vorhergehenden Ansprüche, **dadurch gekennzeichnet, dass** die benannte Identifizierung des Mobilteilnehmers die IMSI ist.

8. Verfahren gemäss einem der vorhergehenden Ansprüche, **dadurch gekennzeichnet, dass** die benannte Bestellungsmeldung (31) eine WAP-Meldung ist.

9. Verfahren gemäss einem der vorhergehenden Ansprüche, **dadurch gekennzeichnet, dass** das benannte Mobilfunknetz (4) ein UMTS-Netz ist und dass die benannte Bestellungsmeldung durch Herstellung einer Verbindung im Datenkanal übertragen wird.

10. Verfahren gemäss einem der vorhergehenden Ansprüche, **dadurch gekennzeichnet, dass** die benannte Bestellungsmeldung (31) vom benannten Mobilfunkteilnehmer elektronisch signiert wird.

11. Verfahren gemäss einem der vorhergehenden Ansprüche, **dadurch gekennzeichnet, dass** die benannte Identifizierung des Produkteanbieters (8) seine Adresse in einem Telekommunikationsnetz (7) enthält.

12. Verfahren gemäss dem vorhergehenden Anspruch, **dadurch gekennzeichnet, dass** das benannte Telekommunikationsnetz (7) ein TCP-IP Netz ist.

13. Verfahren gemäss dem Anspruch 11, **dadurch gekennzeichnet, dass** das benannte Telekommunikationsnetz (7) das öffentliche Telekommunikationsnetz ist.

14. Verfahren gemäss einem der vorhergehenden Ansprüche, **dadurch gekennzeichnet, dass** der benannte Server (5) eine Benutzerdatenbank (50) enthält, in welcher zusätzliche Mobilteilnehmerattribute abgelegt sind und dass zumindest gewisse von diesen zusätzlichen Attributen an den benannten Produktanbieter (8) weitergeleitet werden.

15. Verfahren gemäss dem vorhergehenden Anspruch, **dadurch gekennzeichnet, dass** die benannten zusätzlichen Attribute die Liefer-adresse des bestellenden Mobilteilnehmers umfassen.

16. Verfahren gemäss einem der Ansprüche 14 oder 15, **dadurch gekennzeichnet, dass** die benannten zusätzlichen Attribute die Rechnungsadresse des bestellenden Mobilteilnehmers umfassen.

17. Verfahren gemäss einem der vorhergehenden Ansprüche, **dadurch gekennzeichnet, dass** das bestellte Produkt vom Betreiber des benannten Servers (5) verrechnet wird.

18. Verfahren gemäss dem vorhergehenden Anspruch, **dadurch gekennzeichnet, dass** der benannte Betreiber des benannten Servers (5) auch der Betreiber des benannten Mobilfunknetzes (4) ist und dass das bestellte Produkt (1) wie Verbindungen im benannten Mobilfunknetz verrechnet werden.

19. Verfahren gemäss dem vorhergehenden Anspruch, **dadurch gekennzeichnet, dass** das bestellte Produkt (1) durch Belastung eines vorbezahlten Kontos im Identifikationsmodul (31) des Mobilteilnehmers erfolgt.

20. Verfahren gemäss dem Anspruch 18, **dadurch gekennzeichnet, dass** das bestellte Produkt (1) mit der Telefonrechnung verrechnet wird.

21. Server (5), der in einem Mobilfunknetz (4) angeschlossen werden kann, damit Mobilteilnehmer ihm Meldungen senden können, mit folgenden Merkmalen:
eine Produktedatenbank (51), in welcher Produktbilder gespeichert sind,
eine Benutzerdatenbank (50), in welcher mobilteilnehmerspezifische Attribute abgelegt sind,
ein Modul, um Bilddateien in von Mobilteilnehmern empfangenen Bestellungsmeldungen (31) mit den benannten Produktbildern zu vergleichen.

22. Server gemäss dem vorhergehenden Anspruch, **dadurch gekennzeichnet, dass** das benannte Modul ein Softwaremodul ist.

23. Server gemäss einem der Ansprüche 21 oder 22, **dadurch gekennzeichnet, dass** das benannte Modul ein neuronales Netz verwendet.

24. Server gemäss einem der Ansprüche 21 oder 22, **dadurch gekennzeichnet, dass** er derart ausgestaltet ist, dass er komprimierte Bilddateien in empfangenen Meldungen (31) entkomprimieren kann.

25. Server gemäss einem der Ansprüche 21 oder 22, **dadurch gekennzeichnet, dass** er derart ausgestaltet ist, dass er verschlüsselte Bilddateien in empfangenen Bestellungsmeldungen (31) entschlüsseln kann.

26. System mit
einem Mobilfunktelefon (3),
einem Bildaufnahmegerät (2), und
Datenverarbeitungsmittel im Mobilfunktelefon, um Bilder, die mit dem benannten Bildaufnahmegerät aufgenommen werden, in Meldungen zu verpacken und in ein Mobilfunknetz (4) zu senden,
**gekennzeichnet durch**
Mittel, um eine aufgenommene Bilddatei mit einer aus einem persönlichen Identifizierungsmodul (30) im benannten Mobilfunktelefon (3) entnommenen Benutzeridentifizierung zu verknüpfen, bevor sie in das benannte Mobilfunknetz gesendet werden.

27. System gemäss dem vorhergehenden Anspruch, **dadurch gekennzeichnet, dass** das benannte Bildaufnahmegerät (2) und das benannte Mobilfunktelefon (3) über eine kontaktlose Schnittstelle im Nahbereich verbunden sind.

28. System gemäss einem der Ansprüche 26 bis 27, **dadurch gekennzeichnet, dass** es Mittel enthält, um die benannten Meldungen elektronisch vom benannten Mobilfunkteilnehmer zu signieren.

29. System gemäss einem der Ansprüche 26 bis 28, **dadurch gekennzeichnet, dass** es Mittel enthält, um die benannte Bilddatei zu komprimieren.

30. System gemäss einem der Ansprüche 26 bis 29, **dadurch gekennzeichnet, dass** das Mobilfunktelefon Bildwiedergabemittel enthält, um die benannte Bilddatei zu prüfen.

31. System gemäss einem der Ansprüche 26 bis 30, **dadurch gekennzeichnet, dass** das Mobilfunktelefon Mittel enthält, um die benannte Bilddatei zu editieren.

32. System gemäss einem der Ansprüche 26 bis 31, **dadurch gekennzeichnet, dass** es Mittel enthält, um Mobilteilnehmerpräferenzen einzugeben und in der benannten Meldung zu verknüpfen.

33. System gemäss einem der Ansprüche 26 bis 32, **dadurch gekennzeichnet, dass** die benannte Meldung eine Bestellungsmeldung ist, und dass es einen Zeitstempeldienst enthält, um die Nichtzurückweisung der benannten Bestellungsmeldung sicherzustellen.

## Revendications

1. Procédé avec lequel un abonné mobile dans un réseau radiomobile (4) peut commander des produits (1),
un message de commande (31) étant transmis à un serveur (5) dans ledit réseau radiomobile (4),
un message (52) contenant une identification du produit commandé et de l'abonné mobile commandant étant envoyé à un fournisseur de produits (8),
**caractérisé par**:
la prise d'une image correspondant au produit (1) à commander,
la liaison du fichier d'image avec une identification personnelle de l'abonné mobile dans ledit message de commande,
la comparaison dans ledit serveur dudit fichier d'image avec des images mémorisées dans une banque de données de produits (50), chacune desdites images dans ladite banque de données (50) étant liée à une identification dudit fournisseur de produits (8), auquel ledit message est envoyé.

2. Procédé selon la revendication précédente, **caractérisé en ce que** ladite image est prise avec un appareil photographique (2) lié à un téléphone radiomobile (3).

3. Procédé selon la revendication 1, **caractérisé en ce que** ladite image est prise avec un scanner (2) lié à un téléphone radiomobile (3).

4. Procédé selon la revendication précédente, **caractérisé en ce que** ladite image est une image d'une partie identifiée bidimensionnelle dudit produit (1).

5. Procédé selon la revendication 1, **caractérisé en ce que** ladite image est reçue par un récepteur radio.

6. Procédé selon l'une des revendications précédentes, **caractérisé en ce que** ladite image est prise avec un appareil de prise de vues lié au téléphone radiomobile (3) à travers une interface sans contact (20) à courte distance.

7. Procédé selon l'une des revendications précédentes, **caractérisé en ce que** ladite identification de l'abonné mobile est l'IMSI.

8. Procédé selon l'une des revendications précédentes, **caractérisé en ce que** ledit message de commande (31) est un message WAP.

9. Procédé selon l'une des revendications précédentes, **caractérisé en ce que** ledit réseau radiomobile (4) est un réseau UMTS et **en ce que** ledit message de commande est transmis par l'établissement d'une communication dans le canal de données.

10. Procédé selon l'une des revendications précédentes, **caractérisé en ce que** ledit message de commande (31) est signé électroniquement par ledit abonné radiomobile.

11. Procédé selon l'une des revendications précédentes, **caractérisé en ce que** ladite identification du fournisseur de produits (8) contient son adresse dans un réseau de télécommunication (7).

12. Procédé selon la revendication précédente, **caractérisé en ce que** ledit réseau de télécommunication (7) est un réseau TCP-IP.

13. Procédé selon la revendication 11, **caractérisé en ce que** ledit réseau de télécommunication (7) est le réseau de télécommunication public.

14. Procédé selon l'une des revendications précédentes, **caractérisé en ce que** ledit serveur (5) contient une banque de données d'utilisateurs (50) dans laquelle des attributs supplémentaires des abonnés mobiles sont stockés et **en ce qu'**au moins certains de ces attributs supplémentaires sont retransmis audit fournisseur de produits.

15. Procédé selon la revendication précédente, **caractérisé en ce que** lesdits attributs supplémentaires comprennent l'adresse de livraison de l'abonné mobile qui commande.

16. Procédé selon l'une des revendications 14 ou 15, **caractérisé en ce que** lesdits attributs supplémentaires comprennent l'adresse de facturation de l'abonné mobile qui commande.

17. Procédé selon l'une des revendications précédentes, **caractérisé en ce que** le produit commandé est facturé par l'exploitant dudit serveur (5).

18. Procédé selon la revendication précédentes, **caractérisé en ce que** ledit exploitant dudit serveur (5) est aussi l'exploitant dudit réseau radiomobile (4) et **en ce que** le produit commandé (1) est facturé comme des communications dans ledit réseau radiomobile.

19. Procédé selon la revendication précédente, **caractérisé en ce que** le paiement du produit commandé (1) est effectué par le débit d'un compte prépayé dans le module d'identification (31) de l'abonné mobile.

20. Procédé selon la revendication 18, **caractérisé en ce que** le produit commandé (1) est facturé avec la facture de téléphone.

21. Serveur (5) pouvant être connecté dans un réseau radiomobile (4) afin que des abonnés mobiles puissent lui envoyer des messages, avec les caractéristiques suivantes:
une banque de données de produits (51) dans laquelle des images de produits sont mémorisées,
une banque de données d'utilisateurs (50) dans laquelle sont stockés des attributs spécifiques aux abonnés mobiles,
un module pour comparer des fichiers d'image dans des messages de commande (31) reçus d'abonnés mobiles avec lesdites images de produits.

22. Serveur selon la revendication précédente, **caractérisé en ce que** ledit module est un module logiciel.

23. Serveur selon l'une des revendications 21 ou 22, **caractérisé en ce que** ledit module utilise un réseau neuronal.

24. Serveur selon l'une des revendications précédentes, **caractérisé en ce qu'**il est configuré de telle manière qu'il peut décompresser des fichiers d'images compressés dans des messages (31) reçus.

25. Serveur selon l'une des revendications 21 ou 22, **caractérisé en ce qu'**il est configuré de telle manière qu'il peut décrypter des fichiers d'images cryptés dans des messages de commandes (31) reçus.

26. Système avec
un téléphone radiomobile (3),
un appareil de prise de vues (2), et
des moyens de traitement des données dans le téléphone radiomobile pour empaqueter dans des messages des images qui sont prises avec ledit appareil de prises de vue et les envoyer dans un réseau radiomobile (4),
**caractérisé par**
des moyens pour lier un fichier d'image pris avec une identification d'utilisateur tirée d'un module d'identification (30) personnel dans ledit téléphone radiombile (3) avant qu'il ne soit envoyé dans ledit réseau radiomobile.

27. Système selon la revendication précédente, **caractérisé en ce que** ledit appareil de prise de vues (2) et ledit téléphone radiomobile (3) sont liés à travers une interface sans contact à courte distance.

28. Système selon l'une des revendications 26 à 27, **caractérisé en ce qu'**il contient des moyens pour signer électroniquement lesdits messages dudit abonné radiomobile.

29. Système selon l'une des revendications 26 à 28, **caractérisé en ce qu'**il contient des moyens pour comprimer ledit fichier d'image.

30. Système selon l'une des revendications 26 à 29, **caractérisé en ce que** ledit téléphone radiomobile contient des moyens de restitution des images pour vérifier ledit fichier d'image.

31. Système selon l'une des revendications 26 à 30, **caractérisé en ce que** le téléphone radiomobile contient des moyens pour éditer ledit fichier d'image.

32. Système selon l'une des revendications 26 à 31, **caractérisé en ce qu'**il contient des moyens pour introduire et lier dans ledit message des préférences d'abonné mobile.

33. Système selon l'une des revendications 26 à 32, **caractérisé en ce que** ledit message est un message de commande, et **en ce qu'**il contient un service d'horodateur pour garantir le non-rejet dudit message de commande.

## Claims

1. Method with which a mobile user in a mobile network (4) can order products (1),
an order message (31) being transmitted to a server (5) in said mobile radio network (4),
a message (52) containing an identification of the ordered product (1) and of the ordering mobile user being sent to a product supplier (8),
**characterized by**:
recording an image corresponding to the product (1) to be ordered,
linking the image data with a personal identification of the mobile user in said order message,
comparing in said server said image data with images stored in a product database (50), each said image in said database (50) being linked with an identification of the product supplier (8) to which said message is sent.

2. Method according to the preceding claim, **characterized in that** said image is recorded with a camera (2) connected with a mobile radio telephone (3).

3. Method according to claim 1, **characterized in that** said image is recorded with a scanner (2) connected with a mobile radio telephone (3).

4. Method according to the preceding claim, **characterized in that** said image is an image of a two-dimensional identified part of said product (1).

5. Method according to claim 1, **characterized in that** said image is received by a radio receiver.

6. Method according to one of the preceding claims, **characterized in that** said image is recorded with an image recording device (2) connected with a mobile radio telephone (3) over a contactless interface (20) at close range.

7. Method according to one of the preceding claims, **characterized in that** said identification of the mobile user is the IMSI.

8. Method according to one of the preceding claims, **characterized in that** said order message (31) is a WAP message.

9. Method according to one of the preceding claims, **characterized in that** said mobile radio network (4) is a UMTS network and **in that** said order message is transmitted by establishing a connection in the data channel.

10. Method according to one of the preceding claims, **characterized in that** said order message (31) is signed electronically by said mobile radio user.

11. Method according to one of the preceding claims, **characterized in that** said identification of the product supplier (8) contains his address in a telecommunication network (7).

12. Method according to the preceding claim, **characterized in that** said telecommunication network (7) is a TCP-IP network.

13. Method according to claim 11, **characterized in that** said telecommunication network (7) is the public telecommunication network.

14. Method according to one of the preceding claims, **characterized in that** said server (5) comprises a user database (50) in which additional mobile user attributes are stored and **in that** at least certain of these additional attributes are forwarded to said product supplier (8).

15. Method according to the preceding claim, **characterized in that** said additional attributes include the delivery address of the ordering mobile user.

16. Method according to one of the claims 14 or 15, **characterized in that** said additional attributes include the billing address of the ordering mobile user.

17. Method according to one of the preceding claims, **characterized in that** the ordered product is billed by the operator of said server (5).

18. Method according to the preceding claim, **characterized in that** said operator of said server (5) is also the operator of said mobile radio network (4) and **in that** the ordered product (1) is billed like connections in said mobile radio network.

19. Method according to the preceding claim, **characterized in that** payment of the ordered product (1) is effected by debiting a prepaid account in the identification module (31) of the mobile user.

20. Method according to claim 18, **characterized in that** the ordered product (1) is billed with the telephone bill.

21. Server (5) capable of being connected in a mobile radio network (4) so that mobile users can send messages to it, having the following characteristics:
a product database (51) in which product images are stored,
a user database (50) in which mobile user specific attributes are stored,
a module for comparing image data in the order messages (31) received from mobile users with said product images.

22. Server according to the preceding claim, **characterized in that** said module is a software module.

23. Server according to one of the claims 21 or 22, **characterized in that** said module uses a neuronal network.

24. Server according to one of the claims 21 or 22, **characterized in that** it is designed so as to be able to decompress compressed image data in received messages (31).

25. Server according to one of the claims 21 or 22, **characterized in that** it is designed so as to be able to decrypt encrypted image data in received order messages (31).

26. System with
a mobile radio telephone (3),
an image recording device (2), and
data processing means in the mobile radio telephone for packaging images taken with said image recording device into messages and sending them in a mobile radio network (4),
**characterized by**
means for linking a recorded image data with a user identification procured from the personal identification module (30) in said mobile radio telephone (3) before it is sent in said mobile radio network.

27. System according to the preceding claim, **characterized in that** said image recording device (2) and said mobile radio telephone (3) are connected over a contactless interface at close range.

28. System according to one of the claims 26 to 27, **characterized in that** it contains means for signing said messages electronically by said mobile radio user.

29. System according to one of the claims 26 to 28, **characterized in that** it contains means for compressing said image data.

30. System according to one of the claims 26 to 30, **characterized in that** the mobile radio telephone contains image reproducing means for verifying said image data.

31. System according to one of the claims 26 to 30, **characterized in that** the mobile radio telephone contains means for editing said image data.

32. System according to one of the claims 26 to 31, **characterized in that** it contains means for entering mobile user preferences and linking them in said message.

33. System according to one of the claims 26 to 32, **characterized in that** said message is an order message and **in that** it contains a time stamp service for ensuring the non-rejection of said order message.
